# EUROPEAN PATENT APPLICATION

(11) **EP 4 782 094 A1**
(43) Date of publication of application: **29.07.2026**
(21) Application number: 25305078.5
(22) Date of filing: 22.01.2025
(51) Int. Cl.: B01D 53/62, F03G 7/05

(54) **SELF-POWERED DIRECT OCEAN CAPTURE OFFSHORE PLATFORM**

(71) Applicant: Technip Energies France, 92741 Nanterre Cedex (FR)
(72) Inventor: Koo, Bonjun, 92741 Nanterre Cedex (FR); Tcherniguin, Nicolas, 92741 Nanterre Cedex (FR)
(74) Representative: Edson, Russell Gregory

(57) **Abstract**

Integrated ocean thermal energy conversion and direct ocean carbon dioxide capture systems and related methods provide for extraction of carbon dioxide from seawater for storage and/or sequestration. A method of capturing carbon dioxide includes supplying a flow of warm seawater and a flow of cold seawater to an ocean thermal energy conversion system to generate power. The power generated by the ocean thermal energy conversion system is used to power a CO₂ extraction system to extract CO₂ from a carbon dioxide containing flow of seawater.

## Description

### BACKGROUND

Carbon dioxide removal (CDR) refers to removal of carbon dioxide (CO₂) from the atmosphere and storage of the CO₂ via deliberate human action as opposed to natural CO₂ uptake. CDR is increasingly used to support CO₂ emissions mitigation efforts.

### BRIEF SUMMARY

The following presents a simplified summary of some systems and methods of the present disclosure in order to provide a basic understanding of the present disclosure. This summary is not an extensive overview of the present disclosure. It is not intended to identify key/critical elements of the present disclosure or to delineate the scope of the present disclosure. Its sole purpose is to present some systems and methods of the present disclosure in a simplified form as a prelude to the more detailed description that is presented later.

Systems and methods described herein are directed to self-powered systems and related methods for extracting carbon dioxide (CO₂) from seawater using electrical power generated via ocean thermal energy conversion. Direct Ocean CO₂ Capture (DOC) is an innovative technique designed to extract CO₂ directly from ocean water. DOC is increasingly recognized as a viable strategy for CO₂ emissions mitigation, capitalizing on the ocean's role as a significant natural reservoir for CO₂. It is estimated that oceans absorb approximately 30-40% of anthropogenic CO₂ emissions. A DOC process can employ electrochemical reactions to extract CO₂ from ocean water. DOC, however, is energy-intensive and could inadvertently generate CO₂ emissions if not powered by renewable energy sources. Ocean thermal energy conversion (OTEC) harnesses the thermal gradient between the ocean's warm surface water and its cold deep waters to produce electricity. By integrating OTEC with DOC, self-powered systems and related methods for extracting CO₂ from seawater described herein can be used to mitigate anthropogenic CO₂ emissions.

Thus, in one aspect, a first method of capturing carbon dioxide (CO₂) is provided. The first method includes: (a) supplying a flow of warm seawater and a flow of cold seawater to an ocean thermal energy conversion (OTEC) system to generate power based on a temperature differential between the flow of warm seawater and the flow of cold seawater, and (b) using the power generated by the OTEC system to power a CO₂ extraction system to extract CO₂ from a carbon dioxide containing flow of seawater.

In the first method, the carbon dioxide containing flow of seawater can include one or more of any suitable flows of seawater. For example, the carbon dioxide containing flow of seawater can include one or more of at least a portion of the flow of warm seawater or at least a portion of the flow of cold seawater. As another example, the first method can optionally include combining the flow of warm seawater and the flow of cold seawater with a supplemental flow of seawater from a supplemental seawater inlet of the CO₂ extraction system to form the carbon dioxide containing flow of seawater. The first method can optionally include: (a) operating one or more supplemental seawater pumps to pump the supplemental flow of seawater to the supplemental seawater inlet of the CO₂ extraction system, and (b) controlling the one or more supplemental seawater pumps, by a computer system, to control a temperature of the carbon dioxide containing flow of seawater discharged by the CO₂ extraction system. The first method can optionally include: (a) operating one or more supplemental seawater pumps to pump the supplemental flow of seawater to the supplemental seawater inlet of the CO₂ extraction system, and (b) controlling, by a computer system, the one or more supplemental seawater pumps to adjust total power consumed by the CO₂ extraction system per unit mass of CO₂ extracted by the CO₂ extraction system. The first method can optionally include: (a) operating one or more supplemental seawater pumps to pump the supplemental flow of seawater to the supplemental seawater inlet of the CO₂ extraction system, and (b) controlling, by a computer system, the one or more supplemental seawater pumps to adjust a rate of extraction of CO₂ by the CO₂ extraction system.

In the first method, the OTEC system can be configured to generate any suitable amount of power to power operation of the CO₂ extraction system and any related system. As one non-limiting example, 100% of a power requirement of the CO₂ extraction system can be satisfied by the power generated by the OTEC system. The first method can optionally further include: (a) compressing the extracted CO₂ using power generated by the OTEC system to form compressed CO₂, and (b) injecting the compressed CO₂ into a reservoir using power generated by the OTEC system.

The first method can optionally further include controlling the temperature of the flow of cold seawater so that the OTEC system generates a designated amount of power. For example, the first method can optionally further include: (a) varying a depth of intake of the flow of cold seawater to vary a temperature of the flow of cold seawater to vary an amount of power generated by the OTEC system, and (b) controlling, by a computer system, reconfiguration of a first seawater pipe assembly to vary the depth of intake of the flow of cold seawater to control a temperature of the flow of cold seawater so that all power consumed by the CO₂ extraction system is generated by the OTEC system. As another example, supplying the flow of cold seawater to the ocean thermal energy conversion (OTEC) system in the first method can optionally include pumping seawater from multiple depths and combining the seawater pumped from multiple depths to form the flow of cold seawater. The first method can optionally further include controlling, by a computer system, pumping rates of seawater from the multiple depths to control a temperature of the flow of cold seawater so that all power consumed by the CO₂ extraction system is generated by the OTEC system.

In another aspect, a first self-powered direct ocean carbon dioxide (CO₂) capture offshore platform includes an ocean thermal energy conversion (OTEC) system and a carbon dioxide (CO₂) extraction system. The OTEC system includes a closed loop power generation assembly, a warm seawater assembly, and a cold seawater assembly. The closed loop power generation assembly includes an evaporator, a working fluid pump, a condenser, a turbine, and a generator driven by the turbine to generate electrical power. The evaporator includes an evaporator seawater inlet, an evaporator working fluid inlet, an evaporator seawater outlet, and evaporator working fluid outlet. The condenser includes a condenser seawater inlet, a condenser working fluid inlet, a condenser seawater outlet, and condenser working fluid outlet. The cold seawater assembly includes a cold seawater pump assembly and a cold seawater pipe assembly configured to intake a flow of cold seawater comprising a first flow of cold seawater from a first cold seawater depth of at least 500 meters. The cold seawater pump assembly is configured to pump the flow of cold seawater through the cold seawater pipe assembly to the condenser seawater inlet. The warm seawater assembly includes a warm seawater pump and a warm seawater pipe. The warm seawater pump is configured to pump a flow of warm seawater through the warm seawater pipe to the evaporator seawater inlet. The CO₂ extraction system includes a CO₂ extraction assembly configured to extract a flow of CO₂ for storage from a CO₂ containing flow of seawater. The CO₂ extraction system is powered by at least some of the electrical power generated by the OTEC system.

The first self-powered direct ocean carbon dioxide (CO₂) capture offshore platform can be configured so that the CO₂ containing flow of seawater is formed from any one or more suitable flows of seawater. For example, the first self-powered direct ocean carbon dioxide (CO₂) capture offshore platform can be configured so that the CO₂ containing flow of seawater includes one or more of at least a portion of the flow of cold seawater and/or at least a portion of the flow of warm seawater. The first self-powered direct ocean CO₂ capture offshore platform can optionally be configured so that the CO₂ extraction system further includes a CO₂ extraction system supplemental seawater inlet for receiving a supplemental flow of seawater, and to further include (a) a supplemental seawater pump for pumping the supplemental flow of seawater to the CO₂ extraction system supplemental seawater inlet, and (b) a computer system configured to control the supplemental seawater pump to control a temperature of the CO₂ containing flow seawater discharged by a seawater discharge pipe. The first self-powered direct ocean CO₂ capture offshore platform can optionally be configured so that the CO₂ extraction system further includes a CO₂ extraction system supplemental seawater inlet for receiving a supplemental flow of seawater, wherein the CO₂ containing flow of seawater is further formed from the supplemental flow of seawater, and to further include: (a) a supplemental seawater pump for pumping the supplemental flow of seawater to the CO₂ extraction system supplemental seawater inlet, and (b) a computer system configured to control the supplemental seawater pump to minimize total power consumed by the CO₂ extraction system per unit mass of CO₂ extracted by the CO₂ extraction system. The first self-powered direct ocean CO₂ capture offshore platform can optionally be configured so that the CO₂ extraction system further includes a CO₂ extraction system supplemental seawater inlet for receiving a supplemental flow of seawater, wherein the CO₂ containing flow of seawater is further formed from the supplemental flow of seawater, and to further include: (a) a supplemental seawater pump for pumping the supplemental flow of seawater to the CO₂ extraction system supplemental seawater inlet, and (b) a computer system configured to control the supplemental seawater pump to maximize rate of extraction of CO₂ by the CO₂ extraction system.

The first self-powered direct ocean carbon dioxide (CO₂) capture offshore platform can be configured so that the OTEC system is operable to generate sufficient power to power all systems of the first self-powered direct ocean carbon dioxide (CO₂) capture offshore platform. For example, The first self-powered direct ocean carbon dioxide (CO₂) capture offshore platform can be configured so that 100% of a power requirement of the CO₂ extraction system is satisfied by electrical power generated by the OTEC system. The first self-powered direct ocean carbon dioxide (CO₂) capture offshore platform can optionally further include a CO₂ storage system configured to: (a) compress the CO₂ extracted from the CO₂ containing flow of seawater using power generated by the OTEC system to form compressed CO₂, and (b) inject the compressed CO₂ into a reservoir using at least some of the electrical power generated by the OTEC system.

The first self-powered direct ocean carbon dioxide (CO₂) capture offshore platform can optionally be configured to control a temperature of the flow of cold seawater. For example, the first self-powered direct ocean carbon dioxide (CO₂) capture offshore platform can optionally be configured so that the cold seawater pipe assembly is reconfigurable to vary the first cold seawater depth. The first self-powered direct ocean carbon dioxide (CO₂) capture offshore platform can optionally further include a computer system configured to control reconfiguration of the cold seawater pipe assembly to vary the first cold seawater depth to control a temperature of the flow of cold seawater so that all of the electrical power used by the CO₂ extraction system is generated by the OTEC system. The first self-powered direct ocean carbon dioxide (CO₂) capture offshore platform can optionally be configured so that: (a) the cold seawater pipe assembly includes one or more first cold seawater pipes and one or more second cold seawater pipes, (b) the flow of cold seawater further includes a second flow of cold seawater, (c) the one or more first cold seawater pipes are configured to intake the first flow of cold seawater, (d) the one or more second cold seawater pipes are configured to intake the second flow of cold seawater from a second cold seawater depth of at least 100 meters shallower than the first cold seawater depth, and (e) the cold seawater pump assembly includes one or more first cold seawater pumps configured to pump the first flow of cold seawater and one or more second cold seawater pumps configured to pump the second flow of cold seawater. The first self-powered direct ocean carbon dioxide (CO₂) capture offshore platform can optionally further include a computer system configured to control the one or more first cold seawater pumps and the one or more second cold seawater pumps to control a temperature of the flow of cold seawater so that all of the electrical power used by the CO₂ extraction system is generated by the OTEC system.

In another aspect, a second method of capturing carbon dioxide (CO₂) is provided. The second method includes: (a) supplying a flow of warm seawater and a flow of cold seawater that is colder than the flow of warm seawater (e.g., at least 10 degrees Celsius, at least 15 degrees Celsius, at least 20 degrees Celsius) to an ocean thermal energy conversion (OTEC) system to generate power, (b) combining the flow of warm seawater and the flow of cold seawater to at least partially form a third flow of mixed seawater, and (c) using the power generated by the OTEC system to power a CO₂ extraction system to extract CO₂ from the third flow of mixed seawater.

In the second method, an OTEC system can generate the power via a thermal cycle in which a working fluid is used to drive one or more turbines that drive one or more generators. For example, in the second method, supplying the flow of warm seawater and the flow of cold seawater to the ocean thermal energy conversion (OTEC) system to generate power can include: (a) using the flow of warm seawater to evaporate a working fluid, (b) using the evaporated working fluid to drive one or more turbines of the OTEC system that drive one or more generators of the OTEC system to generate the power, and (c) using the flow of cold seawater to liquify the evaporated working fluid.

In the second method, most if not all of the energy consumed by the CO₂ extraction system can optionally be generated by the OTEC system. For example, in the second method, most of the power consumed by the CO₂ extraction system (e.g., at least 75%, at least 85%, at least 95%) can be provided by the OTEC system. In the second method, all of the power consumed by the CO₂ extraction system can be generated by the OTEC system.

The second method can optionally further include varying a depth of intake of the flow of warm seawater to vary a temperature of the flow of warm seawater to vary an amount of power generated by the OTEC system. In the second method, varying the depth of intake of the flow of warm seawater can optionally include telescoping a first seawater pipe assembly via which intake of the flow of warm seawater occurs. The second method can optionally include controlling, by a computer system, reconfiguration of the first seawater pipe assembly to vary the depth from which the intake of the flow of cold seawater occurs to control a temperature of the flow of cold seawater so that all power consumed by the CO₂ extraction system is generated by the OTEC system.

In the second method, supplying the flow of cold seawater to the OTEC system can optionally include pumping seawater from multiple depths and combining the seawater pumped from multiple depths to form the flow of cold seawater. The second method can optionally include controlling, by a computer system, pumping rates of seawater from the multiple depths to control a temperature of the flow of cold seawater so that all power consumed by the CO₂ extraction system is generated by the OTEC system.

In the second method, combining the flow of warm seawater and the flow of cold seawater to at least partially form the third flow of mixed seawater can optionally include combining the flow of warm seawater and the flow of cold seawater with a supplemental flow of seawater from a supplemental seawater inlet of the CO₂ extraction system to form the third flow of mixed seawater. The second method can optionally include operating one or more supplemental seawater pumps to pump the supplemental flow of seawater to the supplemental seawater inlet of the CO₂ extraction system. The second method can optionally include controlling, by a computer system, the one or more supplemental seawater pumps to control a temperature of the third flow of mixed seawater discharged by the CO₂ extraction system. The second method can optionally include controlling, by a computer system, the one or more supplemental seawater pumps to adjust total power consumed by the CO₂ extraction system per unit mass of CO₂ extracted by the CO₂ extraction system. The second method can optionally include controlling, by a computer system, the one or more supplemental seawater pumps to adjust a rate of extraction of CO₂ by the CO₂ extraction system.

In another aspect, a second self-powered direct ocean capture platform includes an ocean thermal energy conversion (OTEC) system, a CO₂ extraction system, and a mixed seawater discharge pipe. The OTEC system includes a closed loop power generation assembly, a warm seawater assembly, and a cold seawater assembly. The closed loop power generation assembly includes an evaporator, a working fluid pump, a condenser, a turbine, and a generator driven by the turbine to generate electrical power. The evaporator includes an evaporator seawater inlet, an evaporator working fluid inlet, an evaporator seawater outlet, and evaporator working fluid outlet. The condenser includes a condenser seawater inlet, a condenser working fluid inlet, a condenser seawater outlet, and condenser working fluid outlet. The cold seawater assembly includes a cold seawater pump assembly and a cold seawater pipe assembly configured to intake a flow of cold seawater comprising a first flow of cold seawater from a cold seawater intake depth (e.g., at least 500 meters, at least 600 meters, at least 700 meters, at least 800 meters, at least 900 meters, at least 1000 meters). The cold seawater pump assembly is configured to pump the flow of cold seawater through the cold seawater pipe assembly to the condenser seawater inlet. The warm seawater assembly includes a warm seawater pump and a warm seawater pipe. The warm seawater pump is configured to pump a flow of warm seawater through the warm seawater pipe to the evaporator seawater inlet. The CO₂ extraction system includes a CO₂ extraction system warm seawater inlet, a CO₂ extraction system cold seawater inlet, a CO₂ extraction assembly, and a mixed seawater outlet. The CO₂ extraction system warm seawater inlet receives the flow of warm seawater from the evaporator seawater outlet. The CO₂ extraction system cold seawater inlet receives the flow of cold seawater from the condenser seawater outlet. The CO₂ extraction assembly is configured to extract a flow of CO₂ for storage from a flow of mixed seawater formed at least partially from the flow of cold seawater and the flow of warm seawater. The mixed seawater discharge pipe is configured to discharge the flow of mixed seawater.

In the second self-powered direct ocean capture offshore platform, most if not all of the energy consumed by the CO₂ extraction system can be generated by the OTEC system. For example, in the second self-powered direct ocean capture offshore platform, most of the power consumed by the CO₂ extraction system (e.g., at least 75%, at least 85%, at least 95%) can be provided by the OTEC system. In the second self-powered direct ocean capture offshore platform, all of the power consumed by the CO₂ extraction system can be provided by the OTEC system.

In the second self-powered direct ocean capture offshore platform, the cold seawater pipe assembly can optionally include a telescoping pipe assembly that is reconfigurable to vary the depth from which intake of the flow of cold seawater occurs. The second self-powered direct ocean capture offshore platform an optionally include a computer system configured to control reconfiguration of the cold seawater pipe assembly to vary the depth from which the intake of the flow of cold seawater occurs to control a temperature of the flow of cold seawater so that all of the electrical power used by the CO₂ extraction system is generated by the OTEC system.

In the second self-powered direct ocean capture offshore platform, the flow of cold seawater can optionally be formed from flows of seawater from multiple depths. For example, in the second self-powered direct ocean capture offshore platform: (a) the cold seawater pipe assembly can optionally include one or more first cold seawater pipes and one or more second cold seawater pipes, (b) the flow of cold seawater can further include a second flow of cold seawater, (c) the one or more first cold seawater pipes can be configured to intake the first flow of cold seawater, (d) the one or more second cold seawater pipes can be configured to intake the second flow of cold seawater from a second cold seawater intake depth that is shallower than the depth of intake of the first flow of cold seawater (e.g., by at least 100 meters, by at least 200 meters, by at least 300 meters, by at least 400 meters, by at least 500 meters), and (e) the cold seawater pump assembly can include one or more first cold seawater pumps configured to pump the first flow of cold seawater and one or more second cold seawater pumps configured to pump the second flow of cold seawater. The second self-powered direct ocean capture offshore platform can optionally include a computer system configured to control the one or more first cold seawater pumps and the one or more second cold seawater pumps to control a temperature of the flow of cold seawater so that all of the electrical power used by the CO₂ extraction system is generated by the OTEC system.

In the second self-powered direct ocean capture offshore platform, the flow of mixed seawater can optionally include a supplemental flow of seawater. For example, in the second self-powered direct ocean capture offshore platform: (a) the CO₂ extraction system can optionally further include a CO₂ extraction system supplemental seawater inlet for receiving a supplemental flow of seawater, and (b) the flow of mixed seawater can further be formed from the supplemental flow of seawater. The second self-powered direct ocean capture offshore platform can optionally further include a supplemental seawater pump for pumping the supplemental flow of seawater to the CO₂ extraction system supplemental seawater inlet. The second self-powered direct ocean capture offshore platform can optionally further include a computer system configured to control the supplemental seawater pump to control a temperature of the flow of mixed seawater discharged by the mixed seawater discharge pipe. The second self-powered direct ocean capture offshore platform can optionally further include a computer system configured to control the supplemental seawater pump to minimize total power consumed by the CO₂ extraction system per unit mass of CO₂ extracted by the CO₂ extraction system. The second self-powered direct ocean capture offshore platform can optionally further include a computer system configured to control the supplemental seawater pump to maximize rate of extraction of CO₂ by the CO₂ extraction system.

For a fuller understanding of the nature and advantages of the present disclosure, reference should be made to the ensuing detailed description and accompanying drawings. Other aspects, objects and advantages of the present disclosure will be apparent from the drawings and detailed description that follows.

### BRIEF DESCRIPTION OF THE DRAWINGS

For a more complete understanding of the present disclosure and its features and advantages, reference is now made to the following description, taken in conjunction with the accompanying drawings, in which:
**FIG. 1** shows a simplified schematic representation of a self-powered direct ocean carbon dioxide capture offshore platform, in accordance with systems and methods of the present disclosure;
**FIG. 2** shows a simplified schematic diagram of a method of extracting CO₂ from ocean water, in accordance with systems and methods of the present disclosure;
**FIG. 3** shows a simplified schematic diagram of a method of generating power that can be used to power a CO₂ extraction system to extract CO₂ from seawater;
**FIG. 4** shows a simplified schematic representation of another self-powered direct ocean carbon dioxide capture offshore platform, in accordance with systems and methods of the present disclosure;
**FIG. 5** illustrates a first example of an integrated OTEC and CO₂ extraction system of the self-powered direct ocean carbon dioxide capture offshore platform of **FIG. 4****;**
**FIG. 6** illustrates a second example of an integrated OTEC and CO₂ extraction system of the self-powered direct ocean carbon dioxide capture offshore platform of **FIG. 4****;**
**FIG. 7** illustrates a third example of an integrated OTEC and CO₂ extraction system of the self-powered direct ocean carbon dioxide capture offshore platform of **FIG. 4****;**
**FIG. 8** shows a simplified schematic representation of a CO₂ extraction system of the self-powered direct ocean carbon dioxide capture offshore platforms of **FIG. 1** and **FIG. 4****;**
**FIG. 9** shows a simplified schematic representation of an example 12.5MW OTEC unit that can be employed in the self-powered direct ocean carbon dioxide capture offshore platform of **FIG. 4****;**
**FIG. 10** shows a simplified schematic diagram of another method of extracting CO₂ from ocean water, in accordance with systems and methods of the present disclosure;
**FIG. 11** and **FIG. 12** show additional acts that can be accomplished in the method of **FIG. 10****.**

### DETAILED DESCRIPTION

In the following description, details are set forth by way of example to facilitate discussion of the disclosed subject matter. It should be apparent to a person of ordinary skill in the field, however, that the disclosed systems and methods of the present disclosure are exemplary and not exhaustive of all possible systems and methods that are in accordance with the present disclosure.

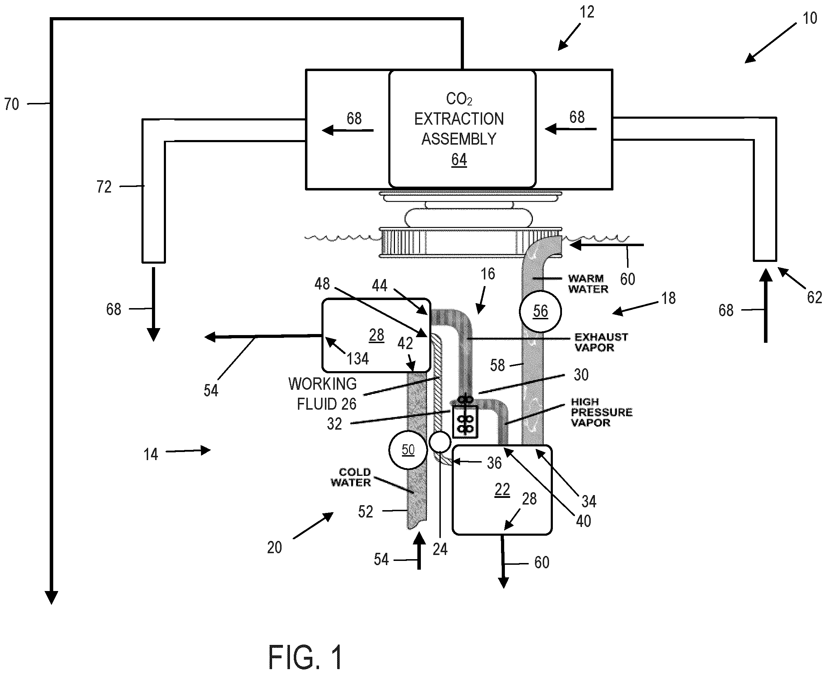

Turning now to the drawing figures in which similar reference identifiers refer to similar elements, **FIG. 1** shows a simplified schematic representation of a self-powered direct ocean carbon dioxide capture offshore platform 10. The self-powered direct ocean carbon dioxide capture offshore platform 10 includes a CO₂ extraction system 12 and an ocean thermal energy conversion (OTEC) system 14. The OTEC system 14 is configured to generate and supply electrical power to power operation of the CO₂ extraction system 12. The CO₂ extraction system 12 is configured to extract CO₂ from seawater. The CO₂ extraction system 102 can optionally employ electrochemical reactions to extract the CO₂ from seawater. The extracted CO₂ can be stored (e.g., via injection into a subsurface reservoir) or otherwise sequestered.

The OTEC system 14 includes a closed loop power generation assembly 16, a warm seawater assembly 18, and a cold seawater assembly 20. The closed loop power generation assembly 16 includes an evaporator 22, a working fluid pump 24, a working fluid 26, a condenser 28, a turbine 30, and a generator 32 driven by the turbine 30 to generate electrical power. The evaporator 22 includes an evaporator seawater inlet 34, an evaporator working fluid inlet 36, an evaporator seawater outlet 38, and an evaporator working fluid outlet 40. The condenser 28 includes a condenser seawater inlet 42, a condenser working fluid inlet 44, a condenser seawater outlet 46, and condenser working fluid outlet 48. The cold seawater assembly 20 includes a cold seawater lift pump 50 and a cold seawater pipe assembly 52 configured to intake a flow of cold seawater including a first flow of cold seawater 54 from a cold seawater intake depth (e.g., at least 500 meters, at least 600 meters, at least 700 meters, at least 800 meters, at least 900 meters, at least 1000 meters). The cold seawater lift pump 50 is configured to pump the flow of cold seawater through the cold seawater pipe assembly 52 to the condenser seawater inlet 42. The warm seawater assembly 18 includes a warm seawater lift pump 56 and a warm seawater pipe 58. The warm seawater lift pump 56 is configured to pump a flow of warm seawater 60 through the warm seawater pipe 58 to the evaporator seawater inlet 34.

The CO₂ extraction system 12 includes a CO₂ extraction system seawater inlet 62, a CO₂ extraction assembly 64, and a seawater outlet 66. The CO₂ extraction system seawater inlet 62 receives a carbon dioxide containing flow of seawater 68 via the CO₂ extraction system seawater inlet 62. The CO₂ extraction assembly 64 is configured to extract a flow of CO₂ 70 for storage from the carbon dioxide containing flow of seawater 68. The self-powered direct ocean carbon dioxide capture offshore platform 10 includes a seawater discharge pipe 72 configured to discharge the flow of seawater 68.

In the self-powered direct ocean capture offshore platform 10, most if not all of the energy consumed by the CO₂ extraction system 12 can be generated by the OTEC system 14. For example, in the self-powered direct ocean capture offshore platform 10, most of the power consumed by the CO₂ extraction system 12 (e.g., at least 75%, at least 85%, at least 95%) can be generated by the OTEC system 14. In the self-powered direct ocean capture offshore platform 10, all of the power consumed by the CO₂ extraction system 12 can be generated by the OTEC system 14. For example, the OTEC system 14 can be configured to generate 100 megawatts or more of electrical power and the CO₂ extraction system 12 can be configured to consume between 90 megawatts and 100 megawatts of electrical power.

In operation, the closed loop power generation assembly 16 generates power via rotation of the turbine 30 by a high pressure flow of the working fluid 26 in a gaseous state. The turbine 30 rotates the generator 32, which generates the electrical power. The working fluid pump 24 pumps the working fluid 26 (in a liquid state) from the condenser 28 to the evaporator 22. The working fluid pump 24 increases the pressure of the working fluid 26 supplied to the evaporator 22 relative to the pressure of the working fluid at the inlet of the working fluid pump 24. Heat from the warm water flow 60 supplied to the evaporator 22 evaporates the working fluid 26. The resulting high pressure flow of evaporated working fluid drives the turbine 30. Downstream of the turbine 30, the evaporated working fluid is transferred to the condenser 28. Heat is extracted from the evaporated working fluid by the condenser 28 to condense the evaporated working fluid back to the liquid state. The heat extracted from the evaporated working fluid by the condenser 28 is transferred to the cold water flow 54.

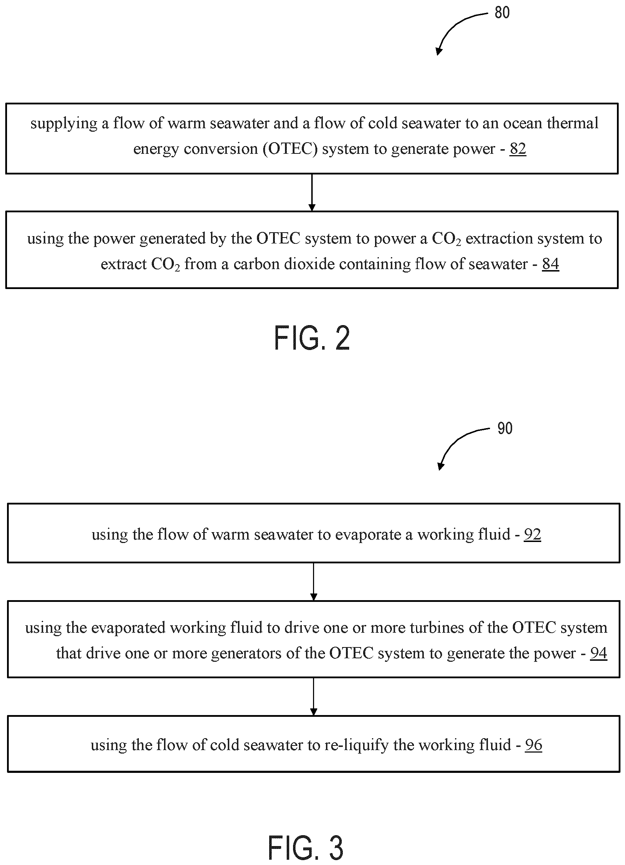

**FIG. 2** shows a simplified schematic diagram of a method 80 of extracting CO₂ from seawater. The method 80 can be accomplished using any suitable combination of an OTEC system and a CO₂ extraction system, such as described herein. In act 82, a flow of warm seawater and a flow of cold seawater that is colder than the flow of warm seawater is supplied to an OTEC system to generate power. In act 84, the power generated by the OTEC system is used to power a CO₂ extraction system to extract CO₂ from a carbon dioxide containing flow of seawater.

**FIG. 3** shows a simplified schematic diagram of a method 90 of generating power to power a CO₂ extraction system to extract carbon dioxide from seawater in the method 80. The method 90 can be accomplished using any suitable combination of an OTEC system and a CO₂ extraction system, such as described herein. In act 92, the flow of warm seawater is used to evaporate a working fluid. In act 94, the evaporated working fluid is used to drive one or more turbines of the OTEC system that drive one or more generators of the OTEC system to generate the power. In act 96, the flow of cold seawater is used to liquify the evaporated working fluid.

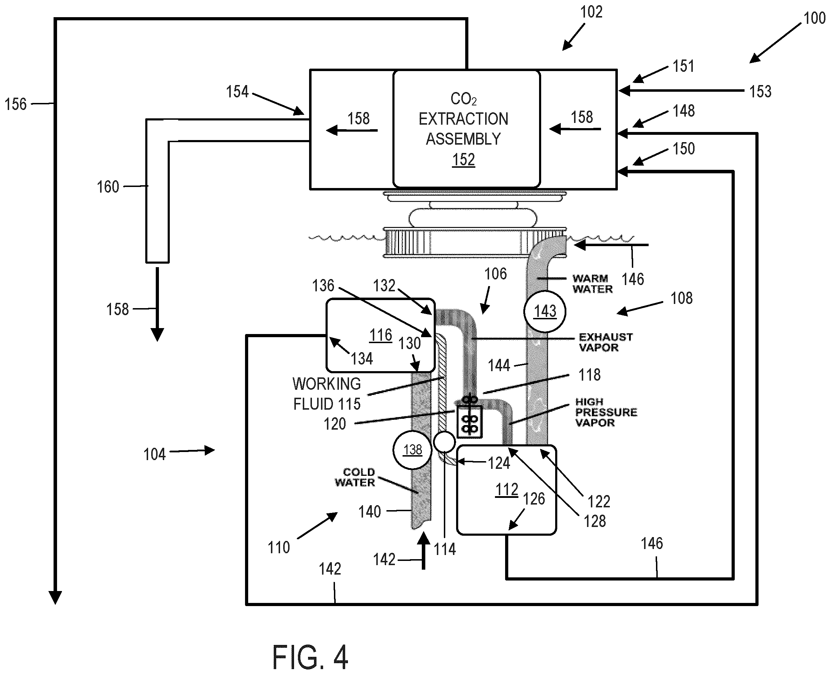

**FIG. 4** shows a simplified schematic representation of a self-powered direct ocean carbon dioxide capture offshore platform 100. The self-powered direct ocean carbon dioxide capture offshore platform 100 includes a CO₂ extraction system 102 and an ocean thermal energy conversion (OTEC) system 104. The OTEC system 104 is configured to generate and supply electrical power to power operation of the CO₂ extraction system 102. The CO₂ extraction system 102 is configured to extract CO₂ from seawater. The CO₂ extraction system 102 can optionally employ electrochemical reactions to extract the CO₂ from seawater. The extracted CO₂ can be stored (e.g., via injection into a subsurface reservoir) or otherwise sequestered.

The OTEC system 104 includes a closed loop power generation assembly 106, a warm seawater assembly 108, and a cold seawater assembly 110. The closed loop power generation assembly 106 includes an evaporator 112, a working fluid pump 114, a working fluid 115, a condenser 116, a turbine 118, and a generator 120 driven by the turbine 118 to generate electrical power. The evaporator 112 includes an evaporator seawater inlet 122, an evaporator working fluid inlet 124, an evaporator seawater outlet 126, and evaporator working fluid outlet 128. The condenser 116 includes a condenser seawater inlet 130, a condenser working fluid inlet 132, a condenser seawater outlet 134, and condenser working fluid outlet 136. The cold seawater assembly 110 includes a cold seawater lift pump 138 and a cold seawater pipe assembly 140 configured to intake a flow of cold seawater including a first flow of cold seawater 142 from a cold seawater intake depth (e.g., at least 500 meters, at least 600 meters, at least 700 meters, at least 800 meters, at least 900 meters, at least 1000 meters). The cold seawater lift pump 138 is configured to pump the flow of cold seawater through the cold seawater pipe assembly 140 to the condenser seawater inlet 130. The warm seawater assembly 108 includes a warm seawater lift pump 143 and a warm seawater pipe 144. The warm seawater lift pump 143 is configured to pump a flow of warm seawater 146 through the warm seawater pipe 144 to the evaporator seawater inlet 122.

The CO₂ extraction system 102 includes a CO₂ extraction system cold seawater inlet 148, a CO₂ extraction system warm seawater inlet 150, a supplemental seawater inlet 151, a CO₂ extraction assembly 152, and a mixed seawater outlet 154. The CO₂ extraction system warm seawater inlet 150 receives the flow of warm seawater 146 from the evaporator seawater outlet 126. The CO₂ extraction system cold seawater inlet 148 receives the flow of cold seawater 142 from the condenser seawater outlet 134. The CO₂ extraction assembly 152 is configured to extract a flow of CO₂ 156 for storage from a flow of mixed seawater 158 formed from the flow of cold seawater 142 and the flow of warm seawater 146. The self-powered direct ocean carbon dioxide capture offshore platform 100 can further include a mixed seawater discharge pipe 160 configured to discharge the flow of mixed seawater 158.

In the self-powered direct ocean capture offshore platform 100, most of the power consumed by the CO₂ extraction system 102 (e.g., at least 75%, at least 85%, at least 95%) can be generated by the OTEC system 104. In the self-powered direct ocean capture offshore platform 100, all of the power consumed by the CO₂ extraction system 102 can be generated by the OTEC system 104. For example, the OTEC system 104 can be configured to generate 100 megawatts of electrical power and the CO₂ extraction system 102 can be configured to consume between 90 megawatts and 100 megawatts of electrical power.

In operation, the closed loop power generation assembly 106 generates power via rotation of the turbine 118 by a high pressure flow of the working fluid 115 in a gaseous state. The turbine 118 rotates the generator 120, which generates the electrical power. The working fluid pump 114 pumps the working fluid 115 (in a liquid state) from the condenser 116 to the evaporator 112. The working fluid pump 114 increases the pressure of the working fluid 115 supplied to the evaporator 112 relative to the pressure of the working fluid at the inlet of the working fluid pump 114. Heat from the warm water flow 146 supplied to the evaporator 112 evaporates the working fluid. The resulting high pressure flow of evaporated working fluid drives the turbine 118. Downstream of the turbine 118, the evaporated working fluid is transferred to the condenser 116. Heat is extracted from the evaporated working fluid by the condenser 116 to condense the evaporated working fluid back to the liquid state. The heat extracted from the evaporated working fluid by the condenser 116 is transferred to the cold water flow 142.

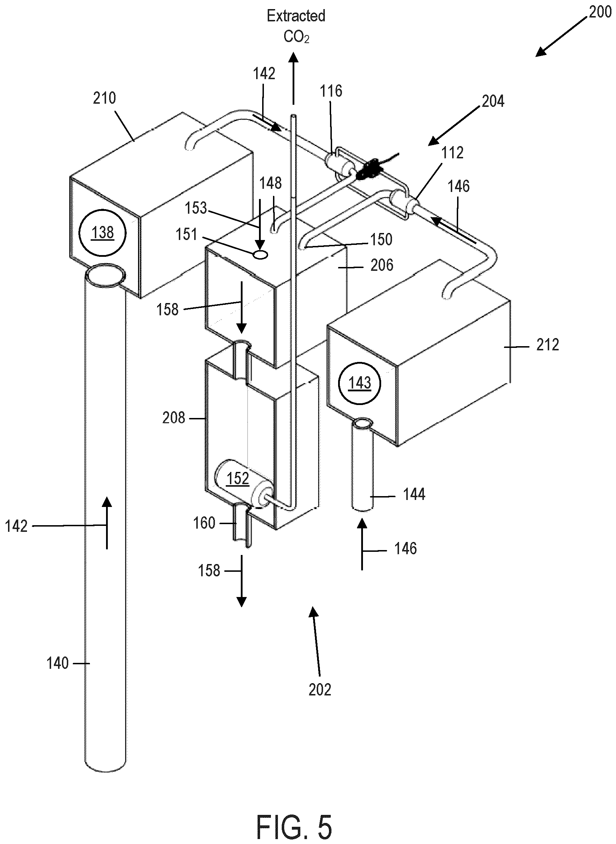

**FIG. 5** illustrates a self-powered direct ocean carbon dioxide capture offshore platform 200 that includes a CO₂ extraction system 202 and an OTEC system 204. The CO₂ extraction system 202 is configured the same as the CO₂ extraction system 102 except for certain elements discussed below. The OTEC system 204 is configured the same as the OTEC system 104 except for certain elements discussed below. The same or similar reference identifiers are used to designate the same or similar elements in the figures.

In the illustrated configuration, the CO₂ extraction system 202 includes a CO₂ extraction system sump 206 and a CO₂ extraction chamber 208. The CO₂ extraction system sump 206 includes the CO₂ extraction system cold seawater inlet 148, the CO₂ extraction system warm seawater inlet 150 and the CO₂ extraction system supplemental seawater inlet 151. The CO₂ extraction system sump 206 receives and mixes the flow of cold seawater 142 and the flow of warm seawater 146 to form the flow of mixed seawater 158.

In the illustrated configuration, the OTEC system 204 includes a cold seawater sump 210 and a warm seawater sump 212. The cold seawater inlet pipe 140 has a fixed length for inlet of the flow of cold seawater 142 from a fixed depth. The cold seawater sump 210 stores a volume of cold seawater for operation of the OTEC system 204. The warm seawater sump 212 stores a volume of warm seawater for operation of the OTEC system 204.

In the offshore platform 200, the OTEC system 204 can be configured to produce at least enough power to power operation of the CO₂ extraction system 202 as well as any other ancillary power requirements of the platform 200. In the offshore platform 200, the OTEC system 204 can be sized based on the flow of cold seawater 142 having a maximum expected cold seawater temperature and the flow of warm seawater 146 having a minimum expected warm seawater temperature so as to ensure sufficient net power production for operation of the CO₂ extraction system 202 as well as any other ancillary power requirements of the platform 200.

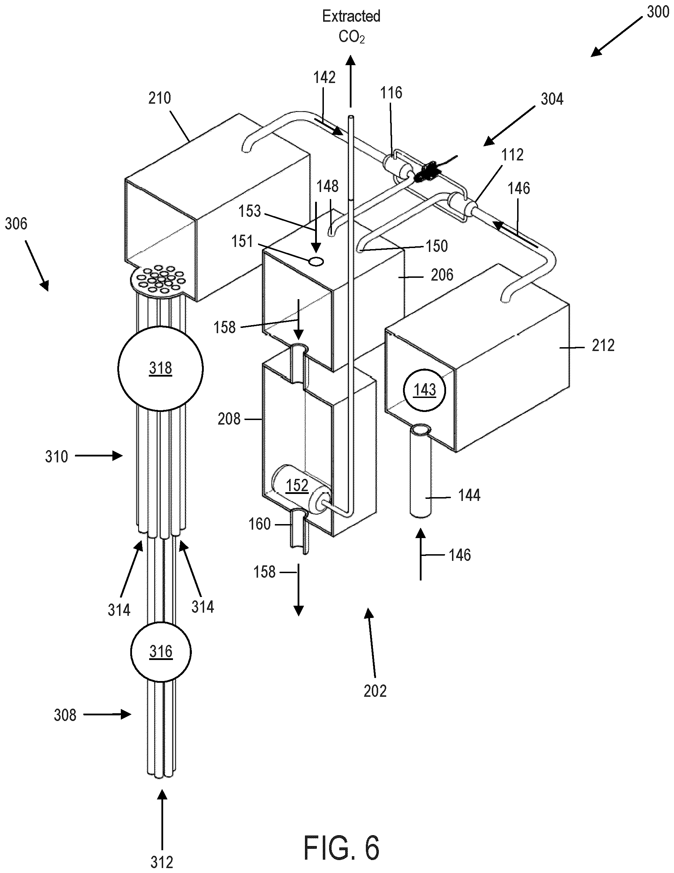

**FIG. 6** illustrates a self-powered direct ocean carbon dioxide capture offshore platform 300 that includes the CO₂ extraction system 202 and an OTEC system 304. The OTEC system 304 is configured the same as the OTEC system 104 except for certain elements discussed below. The same or similar reference identifiers are used to designate the same or similar elements in the figures.

In the illustrated configuration, the OTEC system 304 includes a cold seawater pipe assembly 306, which includes one or more first cold seawater pipes 308 and one or more second cold seawater pipes 310. The flow of cold seawater 142 is formed from a first flow of cold seawater 312 and a second flow of cold seawater 314. The one or more first cold seawater pipes 308 are configured to intake the first flow of cold seawater 312. The one or more second cold seawater pipes 310 are configured to intake the second flow of cold seawater 314 from a second cold seawater intake depth that is shallower than the depth of intake of the first flow of cold seawater 312 (e.g., by at least 100 meters, by at least 200 meters, by at least 300 meters, by at least 400 meters, by at least 500 meters). The OTEC system 304 includes one or more first cold seawater pumps 316 configured to pump the first flow of cold seawater 312 and one or more second cold seawater pumps 318 configured to pump the second flow of cold seawater 314. The offshore platform 300 can include a computer system configured to control the one or more first cold seawater pumps 316 and the one or more second cold seawater pumps 318 to control a temperature of the flow of cold seawater 142 so as to ensure sufficient net power production for operation of the CO₂ extraction system 202 as well as any other ancillary power requirements of the platform 400.

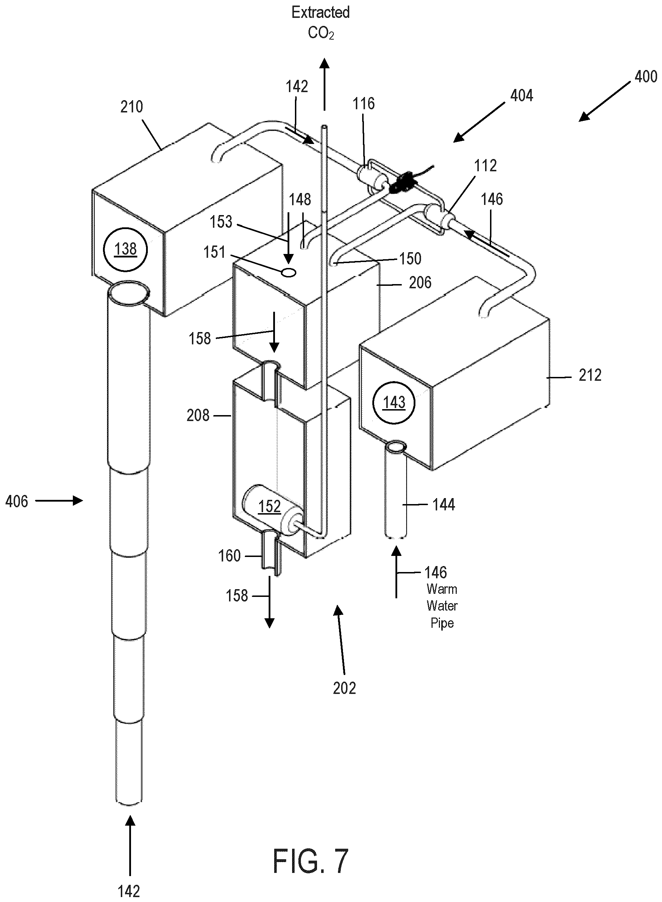

**FIG. 7** illustrates a self-powered direct ocean carbon dioxide capture offshore platform 400 that includes the CO₂ extraction system 202 and an OTEC system 404. The OTEC system 404 is configured the same as the OTEC system 104 except for certain elements discussed below. The same or similar reference identifiers are used to designate the same or similar elements in the figures.

In the illustrated configuration, the OTEC system 404 includes a telescoping cold seawater pipe assembly 406 that is reconfigurable to vary the depth from which intake of the flow of cold seawater 142 occurs. The OTEC system 404 can optionally include a computer system configured to control reconfiguration of the telescoping cold seawater pipe assembly 406 to vary the depth from which the intake of the flow of cold seawater occurs to control a temperature of the flow of cold seawater 142 so as to ensure sufficient net power production for operation of the CO₂ extraction system 202 as well as any other ancillary power requirements of the platform 400.

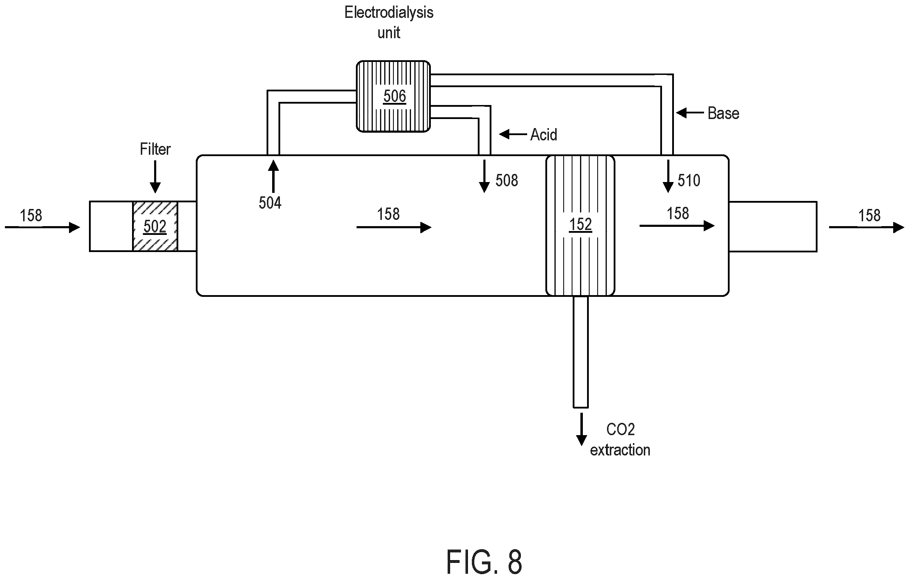

**FIG. 8** shows a simplified schematic representation of an example of the carbon dioxide extraction system 102 of the self-powered direct ocean carbon dioxide capture offshore platform 100. In the illustrated configuration, the flow of mixed seawater 158 is passed through a filter 502 to remove contaminants that may otherwise degrade the functionality of the CO₂ extraction system 102. A portion 504 of the filtered flow of mixed seawater 158 is processed by an electrodialysis unit 506 to produce a flow of acid 508 and a flow of base 510. The flow of acid 508 is added to the flow of mixed seawater 158 thereby producing a chemical reaction that separates CO₂ from the flow of mixed seawater 158. The flow of mixed seawater 158 and the separated CO₂ passes through the CO₂ extraction assembly 152, which contains permeable conduits configured to accommodate passage of CO₂ from the flow of mixed seawater 158 and the separated CO₂ into the permeable conduits and transport of the CO₂ therethrough. The process can be accelerated by applying a vacuum to the permeable conduits to enhance extraction of the separated CO₂ from the flow of mixed seawater 158. The resulting flow of extracted CO₂ can be stored or otherwise sequestered.

In the self-powered direct ocean capture offshore platform 100, 200, 300, 400, the CO₂ extraction system 102, 202 can optionally include a CO₂ extraction system supplemental seawater inlet 151 (shown in **FIG. 4** through **FIG. 7**) for receiving a supplemental flow of seawater 153. The flow of mixed seawater 158 can further include the supplemental flow of seawater 153. The self-powered direct ocean capture offshore platforms 100, 200, 300, 400 can include a supplemental seawater pump for pumping the supplemental flow of seawater 153 to the CO₂ extraction system supplemental seawater inlet 151. The self-powered direct ocean capture offshore platform 100, 200, 300, 400 can further include a computer system configured to control the supplemental seawater pump to control a temperature of the flow of mixed seawater 158 discharged by the mixed seawater discharge pipe 160 to ensure the temperature of the flow of mixed seawater 158 is within acceptable temperature difference with the seawater at the point of discharge. The self-powered direct ocean capture offshore platform 100, 200, 300, 400 can further include a computer system configured to control the supplemental seawater pump to minimize total power consumed by the CO₂ extraction system per unit mass of CO₂ extracted by the CO₂ extraction system. The self-powered direct ocean capture offshore platform 100, 200, 300, 400 can further include a computer system configured to control the supplemental seawater pump to maximize rate of extraction of CO₂ by the CO₂ extraction system.

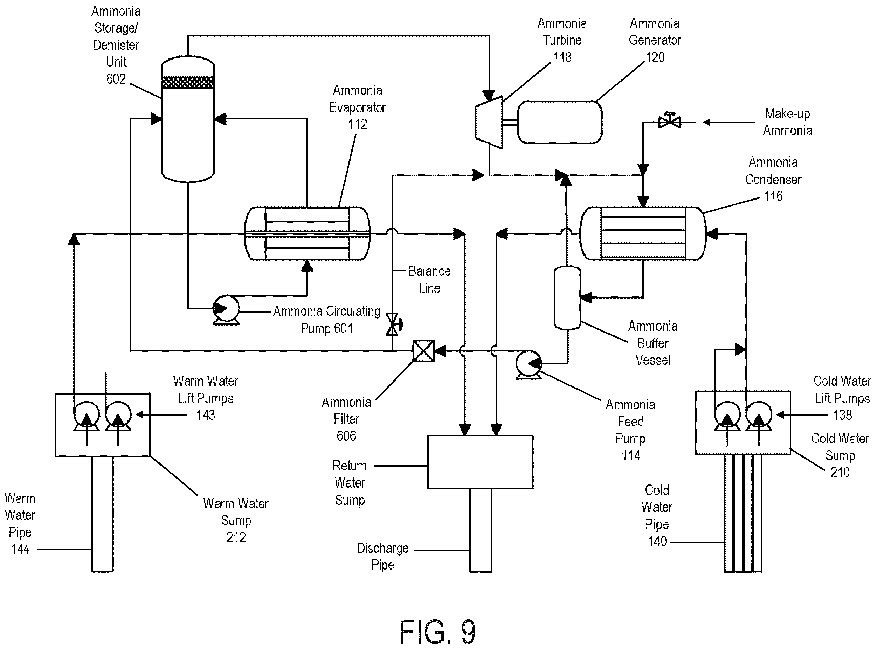

**FIG. 9** shows a simplified schematic representation of an example 12.5 MW OTEC unit 600 that can be employed in the self-powered direct ocean carbon dioxide capture offshore platform 100, 200, 300, 400. The OTEC unit 600 is configured to use ammonia as the working fluid. The OTEC unit 600 includes the warm seawater pipe 144, the warm water sump 212, the warm water lift pump 143, the evaporator 112, a working fluid circulating pump 601, an ammonia storage/demister unit 602, the turbine 118, the generator 120, the condenser 116, an ammonia buffer vessel 604, the working fluid pump 114, an ammonia filter 606, the CO₂ extraction system sump 206, the cold seawater sump 210, the cold seawater lift pump 138, and the cold seawater pipe 140. In operation, the warm seawater lift pump 143 pumps warm seawater from the warm seawater sump 212 to the evaporator 112. The warm seawater 146 is drawn into the warm seawater sump 212 through the warm seawater pipe 144. The evaporator 112 transfers heat from the warm seawater 146 to the working fluid (e.g., ammonia) to evaporate the working fluid. From the evaporator 112, the warm seawater 146 is transferred to the CO₂ extraction system sump 206. The cold seawater lift pump 138 pumps cold seawater 142 from the cold seawater sump 210 to the condenser 116. The cold seawater 142 is drawn into the cold seawater sump 210 through the cold seawater pipe 140. The condenser 116 transfers heat from the working fluid to the cold seawater 142 to condense the working fluid. From the condenser 116, the cold seawater 142 is transferred to the CO₂ extraction system sump 206. The working fluid pump 114 transfers liquid ammonia to the evaporator 112. The evaporator 112 adds heat to the ammonia, which cause the ammonia to change state from liquid to gas. The ammonia storage/demister unit 602 removes any entrained droplets of ammonia from the ammonia gas. The demisted ammonia gas is then delivered to the turbine 118, thereby driving the turbine 118 and the generator 120. From the turbine 118, the ammonia gas is transferred to the condenser 116, which liquifies the ammonia gas. From the condenser 116, the resulting liquified ammonia is transported to the ammonia buffer vessel 604 and through the ammonia filter 606 via operation of the working fluid pump 114. Table 1 lists operational parameters of the example 12.5 MW OTEC unit 600.

**Table 1. Operational parameters of the example 12.5 MW OTEC unit 600.**

| | | |
|---|---|---|
| Ammonia Feed Pump | 724 | kw |
| Ammonia Circulation Pump | 51 | kw |
| Warm Water Lift Pump | 1,691 | kw |
| Cold Water Lift Pump | 2,776 | kw |
| Hotel Load | 270 | kw |
| Total Parasitic Power | 5,512 | kw |
| Ammonia Turbine Power | 19,600 | kw |
| Generator Power | 18,816 | kw |
| New Power | 13,304 | kw |
| Ratio Gen/Net Power | 1.41 | |
| Delivered Power | 12,506 | kw |
| Warm Water Flow | 15,064 | kg/s |
| Cold Water Flow | 34,102 | kg/s |
| Working Fluid Flow | 548 | kg/s |

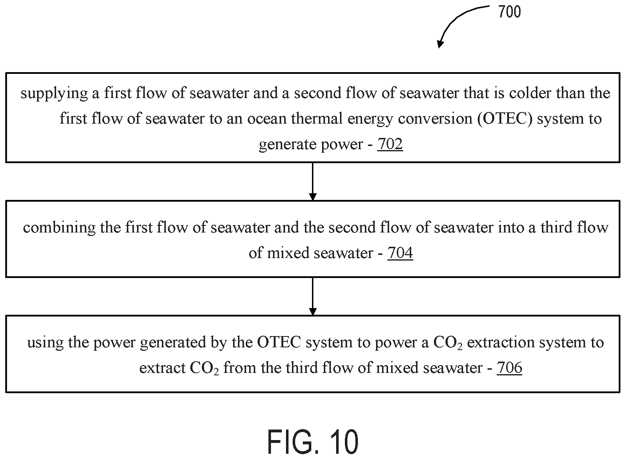

**FIG. 10** shows a simplified schematic diagram of a method 700 of extracting CO₂ from ocean water. The method 700 can be accomplished using any suitable combination of an OTEC system and a CO₂ extraction system, such as described herein. In act 702, a flow of warm seawater and a flow of cold seawater that is colder than the flow of warm seawater is supplied to an OTEC system to generate power. In act 704, the flow of warm seawater and the flow of cold seawater are combined to at least partially form a third flow of mixed seawater. In act 706, the power generated by the OTEC system is used to power a CO₂ extraction system to extract CO₂ from the third flow of mixed seawater.

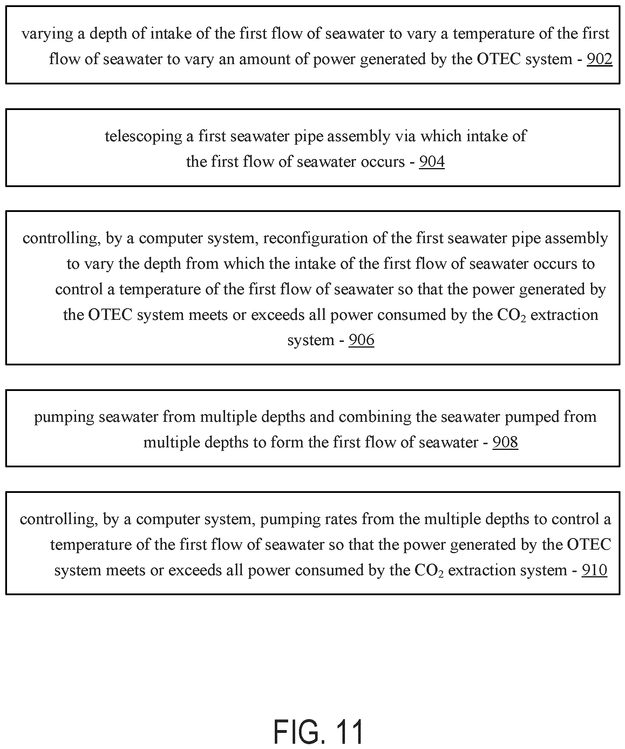

**FIG. 11** shows additional acts 902, 904, 906, 908, 910 that can be accomplished in conjunction with the method 700. In act 902, a depth of intake of the flow of warm seawater is varied to vary a temperature of the flow of warm seawater to vary an amount of power generated by the OTEC system. For example, the depth of the intake of the flow of warm seawater can be increased, which will typically reduce the temperature of the flow of warm seawater, which will tend to increase the temperature differential between the flow of warm seawater and the flow of cold seawater, which will tend to increase the amount of power generated by the OTEC system. Likewise, the depth of the intake of the flow of warm seawater can be decreased, which will tend to decrease the amount of power generated by the OTEC system. The OTEC system can optionally include a telescopic first seawater pipe assembly that can be telescoped to vary the depth of intake of the flow of warm seawater (act 904). A computer system can be used to control reconfiguration of the first seawater pipe assembly to vary the depth from which the intake of the flow of warm seawater occurs to control a temperature of the flow of warm seawater so that the power generated by the OTEC system meets or exceeds all the power consumed by the CO₂ extraction system (act 906). Seawater can be pumped from multiple depths and combined to form the flow of warm seawater (act 908). A computer system can be used to control pumping rates from the multiple depths to control a temperature of the flow of warm seawater so that the power generated by the OTEC system meets or exceeds all power consumed by the CO₂ extraction system (act 910).

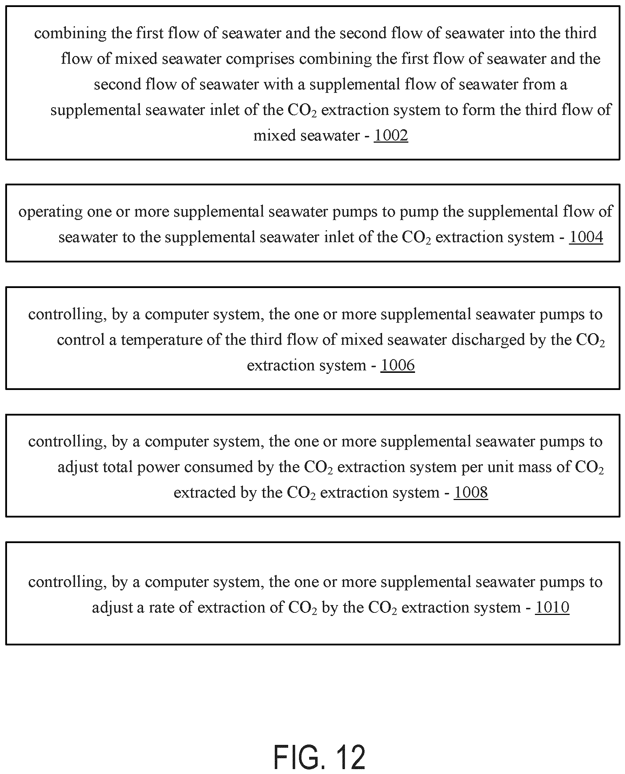

**FIG. 12** shows additional acts 1002, 1004, 1006, 1008, 1010 that can be accomplished in conjunction with the method 700. In act 1002, combining the flow of warm seawater and the flow of cold seawater to at least partially form the third flow of mixed seawater includes combining the flow of warm seawater and the flow of cold seawater with a supplemental flow of seawater from a supplemental seawater inlet of the CO₂ extraction system to form the third flow of mixed seawater. One or more supplemental seawater pumps can be operated to pump the supplemental flow of seawater to the supplemental seawater inlet of the CO₂ extraction system (act 1004). A computer system can be used to control the one or more supplemental seawater pumps to control a temperature of the third flow of mixed seawater discharged by the CO₂ extraction system (act 1006). A computer system can be used to control the one or more supplemental seawater pumps to adjust total power consumed by the CO₂ extraction system per unit mass of CO₂ extracted by the CO₂ extraction system (act 1008). A computer system can be used to control the one or more supplemental seawater pumps to adjust a rate of extraction of CO₂ by the CO₂ extraction system (act 1010).

The OTEC systems described herein can optionally provide both electrical power and a continuous supply of seawater to the CO₂ extraction system, which extracts CO₂ from the continuous supply of seawater. By leveraging the thermal energy gradient between the ocean's surface and deep waters, OTEC generates clean electricity. The electrical power generated by the OTEC system can be used to power electrochemical reactions employed by the CO₂ extraction system to facilitate extraction of CO₂ from seawater.

The integration of OTEC with Direct Ocean CO₂ Capture (DOC) creates a closed-loop system that enhances the efficiency of CO₂ while minimizing the carbon footprint of the operation. The renewable energy produced by the OTEC system ensures that the DOC process remains a net positive contributor to CO₂ emissions mitigation efforts, capturing more CO₂ than the CO₂ emissions produced by the system itself. In addition, power generation from OTEC process can be optimized using multiple depths cold-water pipes or adjustable telescopic cold-water lift pipe.

The integration of OTEC with Direct Ocean CO₂ Capture (DOC) has numerous technical advantages. For example, the integration of OTEC and DOC harnesses renewable energy from OTEC to reduce Greenhouse Gas (GHG) emissions, aligning with global sustainability goals. Electrical power generation via OTEC relies solely on the ocean's natural temperature differential, eliminating the need for fossil fuels and providing a continuous (not intermittent) supply of electrical power. The integrated OTEC and DOC system can be configured to operate autonomously, ensuring a continuous, self-powered system. The integrated OTEC and DOC system can be co-located on a single offshore floating platform, enhancing operational efficiency and reducing infrastructure costs. The OTEC system employed can include a telescopic cold-water pipe or a multiple depths bundled pipe assembly to optimize the temperature of the flow of cold water to optimize the amount of power generated. The use of a telescopic cold-water pipe can be used to eliminates the need for complex upending procedures for cold-water pipe offshore installation. A multiple depth bundled pipe assembly can have increased bending stiffness, which may contribute to the system's robustness and durability. An offshore platform with an integrated OTEC and DOC system can further host and power a CO₂ treatment system such as a CO₂ injection system for injecting the extracted CO₂ into a subsurface reservoir. The water discharge system for an integrated OTEC and DOC system can be adapted on case by case to control the impact on the surface sea water temperature and subsequently on the associated natural living ecosystem.

Other variations are within the spirit of the present disclosure. Thus, while the present disclosure is susceptible to various modifications and alternative constructions, certain illustrated examples thereof are shown in the drawings and have been described above in detail. It should be understood, however, that there is no intention to limit the present disclosure to the specific form or forms disclosed, but on the contrary, the intention is to cover all modifications, alternative constructions, and equivalents falling within the spirit and scope of the present disclosure, as defined in the appended claims.

The use of the terms "a" and "an" and "the" and similar referents in the context of describing the present disclosure (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate systems and methods of the present disclosure and does not pose a limitation on the scope of the present disclosure unless otherwise claimed. No language in the specification should be construed as indicating any non-claimed element as essential to the practice of the present disclosure.

Preferred systems and methods of this present disclosure are described herein, including the best mode known to the inventors for carrying out the present disclosure. Variations of those preferred systems and methods may become apparent to those of ordinary skill in the art upon reading the foregoing description. The inventors expect skilled artisans to employ such variations as appropriate, and the inventors intend for the present disclosure to be practiced otherwise than as specifically described herein. Accordingly, this present disclosure includes all modifications and equivalents of the subject matter recited in the claims appended hereto as permitted by applicable law. Moreover, any combination of the above-described elements in all possible variations thereof is encompassed by the present disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

## Claims

1. A method of capturing carbon dioxide (CO₂) comprising:
supplying a flow of warm seawater and a flow of cold seawater to an ocean thermal energy conversion (OTEC) system to generate power based on a temperature differential between the flow of warm seawater and the flow of cold seawater; and
using the power generated by the OTEC system to power a CO₂ extraction system to extract CO₂ from a carbon dioxide containing flow of seawater.

2. The method of capturing carbon dioxide (CO₂) of claim 1, wherein the carbon dioxide containing flow of seawater comprises one or more of at least a portion of the flow of warm seawater or at least a portion of the flow of cold seawater; optionally, further comprising:
varying a depth of intake of the flow of cold seawater to vary a temperature of the flow of cold seawater to vary an amount of power generated by the OTEC system; and controlling, by a computer system, reconfiguration of a first seawater pipe assembly to vary the depth of intake of the flow of cold seawater to control a temperature of the flow of cold seawater so that all power consumed by the CO₂ extraction system is generated by the OTEC system.

3. The method of capturing carbon dioxide (CO₂) of claim 1, wherein 100% of a power requirement of the CO₂ extraction system is satisfied by the power generated by the OTEC system; optionally, further comprising:
compressing the extracted CO₂ using power generated by the OTEC system to form compressed CO₂; and
injecting the compressed CO₂ into a reservoir using power generated by the OTEC system.

4. The method of capturing carbon dioxide (CO₂) of claim 1, wherein:
supplying the flow of cold seawater to the ocean thermal energy conversion (OTEC) system comprises pumping seawater from multiple depths and combining the seawater pumped from multiple depths to form the flow of cold seawater; and
the method further comprises controlling, by a computer system, pumping rates of seawater from the multiple depths to control a temperature of the flow of cold seawater so that all power consumed by the CO₂ extraction system is generated by the OTEC system.

5. The method of capturing carbon dioxide (CO₂) of claim 1, further comprising combining the flow of warm seawater and the flow of cold seawater with a supplemental flow of seawater to form the carbon dioxide containing flow of seawater; optionally, further comprising:
operating one or more supplemental seawater pumps to pump the supplemental flow of seawater; and
controlling the one or more supplemental seawater pumps, by a computer system, to control a temperature of the carbon dioxide containing flow of seawater discharged by the CO₂ extraction system; and/or, further comprising:
operating one or more supplemental seawater pumps to pump the supplemental flow of seawater; and
controlling, by a computer system, the one or more supplemental seawater pumps to adjust total power consumed by the CO₂ extraction system per unit mass of CO₂ extracted by the CO₂ extraction system; and/or, further comprising:
operating one or more supplemental seawater pumps to pump the supplemental flow of seawater; and
controlling, by a computer system, the one or more supplemental seawater pumps to adjust a rate of extraction of CO₂ by the CO₂ extraction system.

6. A self-powered direct ocean carbon dioxide (CO₂) capture offshore platform comprising:
an ocean thermal energy conversion (OTEC) system comprising a closed loop power generation assembly, a warm seawater assembly, and a cold seawater assembly, wherein:
the closed loop power generation assembly comprises an evaporator, a working fluid pump, a condenser, a turbine, and a generator driven by the turbine to generate electrical power;
the evaporator comprises an evaporator seawater inlet, an evaporator working fluid inlet, an evaporator seawater outlet, and evaporator working fluid outlet;
the condenser comprises a condenser seawater inlet, a condenser working fluid inlet, a condenser seawater outlet, and condenser working fluid outlet;
the cold seawater assembly comprises a cold seawater pump assembly and a cold seawater pipe assembly configured to intake a flow of cold seawater comprising a first flow of cold seawater from a first cold seawater depth of at least 500 meters;
the cold seawater pump assembly is configured to pump the flow of cold seawater through the cold seawater pipe assembly to the condenser seawater inlet;
the warm seawater assembly comprises a warm seawater pump and a warm seawater pipe; and
the warm seawater pump is configured to pump a flow of warm seawater through the warm seawater pipe to the evaporator seawater inlet; and
a CO₂ extraction system comprising a CO₂ extraction assembly configured to extract a flow of CO₂ for storage from a CO₂ containing flow of seawater, wherein the CO₂ extraction system is powered by at least some of the electrical power generated by the OTEC system.

7. The self-powered direct ocean CO₂ capture offshore platform of claim 6, wherein the CO₂ containing flow of seawater comprises one or more of at least a portion of the flow of cold seawater and/or at least a portion of the flow of warm seawater.

8. The self-powered direct ocean CO₂ capture offshore platform of claim 6, wherein 100% of a power requirement of the CO₂ extraction system is satisfied by electrical power generated by the OTEC system.

9. The self-powered direct ocean CO₂ capture offshore platform of claim 8, further comprising a CO₂ storage system configured to:
compress the CO₂ extracted from the CO₂ containing flow of seawater using power generated by the OTEC system to form compressed CO₂; and
inject the compressed CO₂ into a reservoir using at least some of the electrical power generated by the OTEC system.

10. The self-powered direct ocean CO₂ capture offshore platform of claim 6, wherein the cold seawater pipe assembly is reconfigurable to vary the first cold seawater depth, and further comprising a computer system configured to control reconfiguration of the cold seawater pipe assembly to vary the first cold seawater depth to control a temperature of the flow of cold seawater so that the electrical power generated by the OTEC system meets or exceeds all of the electrical power used by the CO₂ extraction system.

11. The self-powered direct ocean CO₂ capture offshore platform of claim 6, wherein:
the cold seawater pipe assembly comprises one or more first cold seawater pipes and one or more second cold seawater pipes;
the flow of cold seawater further comprises a second flow of cold seawater;
the one or more first cold seawater pipes are configured to intake the first flow of cold seawater;
the one or more second cold seawater pipes are configured to intake the second flow of cold seawater from a second cold seawater depth of at least 100 meters shallower than the first cold seawater depth; and
the cold seawater pump assembly comprises one or more first cold seawater pumps configured to pump the first flow of cold seawater and one or more second cold seawater pumps configured to pump the second flow of cold seawater.

12. The self-powered direct ocean CO₂ capture offshore platform of claim 11, further comprising a computer system configured to control the one or more first cold seawater pumps and the one or more second cold seawater pumps to control a temperature of the flow of cold seawater so that the electrical power generated by the OTEC system meets or exceeds all of the electrical power used by the CO₂ extraction system.

13. The self-powered direct ocean CO₂ capture offshore platform of claim 6, wherein the CO₂ extraction system further comprises a CO₂ extraction system supplemental seawater inlet for receiving a supplemental flow of seawater, wherein the CO₂ containing flow of seawater is further formed from the supplemental flow of seawater, and further comprising:
a supplemental seawater pump for pumping the supplemental flow of seawater to the CO₂ extraction system supplemental seawater inlet; and
a computer system configured to control the supplemental seawater pump to control a temperature of the CO₂ containing flow seawater discharged by a seawater discharge pipe.

14. The self-powered direct ocean CO₂ capture offshore platform of claim 6, wherein the CO₂ extraction system further comprises a CO₂ extraction system supplemental seawater inlet for receiving a supplemental flow of seawater, wherein the CO₂ containing flow of seawater is further formed from the supplemental flow of seawater, and further comprising:
a supplemental seawater pump for pumping the supplemental flow of seawater to the CO₂ extraction system supplemental seawater inlet; and
a computer system configured to control the supplemental seawater pump to minimize total power consumed by the CO₂ extraction system per unit mass of CO₂ extracted by the CO₂ extraction system.

15. The self-powered direct ocean CO₂ capture offshore platform of claim 6, wherein the CO₂ extraction system further comprises a CO₂ extraction system supplemental seawater inlet for receiving a supplemental flow of seawater, wherein the CO₂ containing flow of seawater is further formed from the supplemental flow of seawater, and further comprising:
a supplemental seawater pump for pumping the supplemental flow of seawater to the CO₂ extraction system supplemental seawater inlet; and
a computer system configured to control the supplemental seawater pump to maximize rate of extraction of CO₂ by the CO₂ extraction system.
